# EUROPÄISCHE PATENTSCHRIFT

(11) **EP 3 578 933 B1**
(45) Veröffentlichungstag und Bekanntmachung des Hinweises auf die Patenterteilung: **10.11.2021**
(21) Anmeldenummer: 19172274.3
(22) Anmeldetag: 02.05.2019
(51) Int. Cl.: G01G 19/03, B65G 21/20, B65G 15/24

(54) **WÄGE-FÖRDERVORRICHTUNG**
WEIGHING AND CONVEYING DEVICE
DISPOSITIF DE TRANSPORT ET DE PESAGE

(30) Priorität: 07.06.2018 EP 18176604
(43) Veröffentlichungstag der Anmeldung: 11.12.2019
(73) Patentinhaber: Bizerba SE & Co. KG, 72336 Balingen (DE)
(72) Erfinder: Karsten, Merz, 72406 Bisingen (DE)
(74) Vertreter: Manitz Finsterwald Patent- und Rechtsanwaltspartnerschaft mbB

(56) Entgegenhaltungen:
- EP-A2- 1 013 587
- WO-A1-2018/054563
- JP-A- S5 917 442
- US-A- 5 684 275

## Beschreibung

Die vorliegende Erfindung betrifft eine Wäge-Fördervorrichtung für Waren, insbesondere für Verpackungen, insbesondere einen Preisauszeichner, mit zumindest einem Förderband, insbesondere einem Zuführband und/oder einem Vereinzlerband, und einem dem Förderband in Förderrichtung nachgeordneten Wägeband, wobei das jeweilige Förderband einen Bandkörper mit einer Oberseite und ein im Betrieb der Wäge-Fördervorrichtung um den Bandkörper umlaufendes Transportband umfasst, und wobei das zumindest eine Förderband in Förderrichtung beidseits jeweils mit einer Ausrichtschiene versehen ist, wobei die beiden Ausrichtschienen der Ausrichtung der Waren dienen. Eine derartige Wäge-Fördervorrichtung ist aus dem Dokument WO 2018/054563 A1 bekannt.

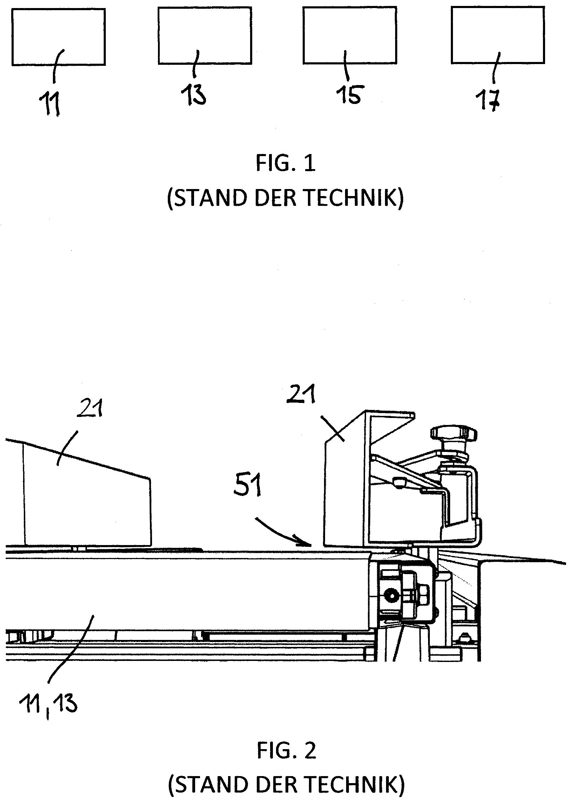

Bei einem Preisauszeichner handelt es sich um eine Vorrichtung, welche im Handel dazu genutzt wird, um Waren mit Preisetiketten zu versehen. In einer üblichen Konfiguration, wie sie in Fig. 1 gezeigt ist, umfasst ein Preisauszeichner ein Zuführband für von einer Verpackungsmaschine kommende Waren, ein an das Zuführband anschließendes Vereinzlerband, um die Waren zu vereinzeln, ein an das Vereinzlerband anschließendes Wägeband, an dem die Waren gewogen werden, und wenigstens ein an das Wägeband anschließendes Etikettierband, in dessen Bereich sich ein jeweiliger Etikettierer befindet, der an die Waren jeweils ein Etikett mit Gewicht und zugehörigem Preis der Ware appliziert.

Darüber hinaus sind bei einem derartigen Preisauszeichner üblicherweise auch sich in Förderrichtung erstreckende Ausrichtschienen vorhanden, die über dem Zuführband und/oder dem Vereinzlerband angeordnet sind. Die Ausrichtschienen dienen beispielsweise dazu, rechteckförmige Waren bzw. Produkte derart auszurichten, dass zwei Produktkanten parallel zur Förderrichtung ausgerichtet sind. Dadurch kann gewährleistet werden, dass beim Etikettieren die Etiketten derart appliziert werden, dass die Etikettenkanten parallel zu den Produktkanten verlaufen, so dass die Etiketten nicht schief auf den Produkten sitzen.

Bei neuen, innovativen Skin-Verpackungen wird das zu verpackende Produkt, beispielsweise ein Stück Fleisch, Fisch oder Wurst, auf einen beschichteten Produktträger aus Karton gelegt, der ein- oder beidseitig bedruckt sein kann. Anschließend wird der Karton mit dem zumeist mittig platzierten Produkt mit einer nach einer Vakuumierung eng anliegenden transparenten Folie überzogen.

Eine Skin-Verpackung ist an ihrem Rand im Wesentlichen nur so hoch, wie der Karton dick ist. Solche Verpackungen können daher unter den Ausrichtschienen hindurch laufen oder in dem zwischen den Ausrichtschienen und dem jeweiligen Förderband ausgebildeten Spalt, wie er bei dem aus dem Stand der Technik bekannten Förderband gemäß Fig. 2 durch einen Pfeil gekennzeichnet ist, verklemmen. Die Skin-Verpackungen können dann entweder nicht ausgerichtet werden oder sie führen zu einem Produktstau.

Der Erfindung liegt daher die Aufgabe zugrunde, eine Wäge-Fördervorrichtung der eingangs genannten Art zu schaffen, die auch Skin-Verpackungen störungsfrei verarbeiten kann.

Diese Aufgabe wird durch eine Wäge-Fördervorrichtung mit den Merkmalen des Anspruchs 1 gelöst, und insbesondere dadurch, dass die Breite des jeweiligen Transportbands kleiner ist als der Abstand der beiden Ausrichtschienen zueinander, wobei das jeweilige Transportband zwischen den beiden Ausrichtschienen angeordnet ist, und wobei die Oberseite des Obertrums des jeweiligen Transportbands oberhalb der Unterkanten der Ausrichtschienen angeordnet ist.

Die Erfindung zeichnet sich dadurch aus, dass Transportbänder verwendet werden, die schmaler sind als aus dem Stand der Technik bekannt, wobei der dadurch zu beiden Seiten geschaffene Platz dazu verwendet wird, die Ausrichtschienen tiefer anzuordnen als aus dem Stand der Technik bekannt, nämlich mit ihren Unterkanten unterhalb der Oberseite des Obertrums der Transportbänder. Der Karton einer auf einem jeweiligen Transportband aufliegenden Skin-Verpackung ist damit immer oberhalb der Unterkanten der Ausrichtschienen angeordnet, so dass ein Einklemmen oder ein unausgerichtetes Hindurchlaufen, wie es zu dem Stand der Technik beschrieben ist, verhindert werden kann.

Die erfindungsgemäße Lösung setzt letztlich voraus, dass Transportbänder verwendet werden, die schmäler sind als die Breite der auszuzeichnenden Verpackungen. Ansonsten könnte eine Ausrichtung der Verpackungen nicht erfolgen. Die erfindungsgemäße Wäge-Fördervorrichtung mit dem oder den gegenüber dem Stand der Technik schmaleren Transportbänder kann aber nicht nur mit den vorstehend erläuterten Skin-Verpackungen betrieben werden, sondern auch mit herkömmlichen Verpackungen.

Für rechteckige Trayschalen-Verpackungen hingegen ist die erfindungsgemäße Lösung weniger geeignet, da diese an ihren Ecken oftmals integral ausgebildete Standfüße besitzen. Bei derartigen Verpackungen ist es dann erforderlich, dass die Transportbänder eine größere Breite aufweisen als die Verpackungen, da ansonsten die Gefahr besteht, dass die Verpackungen mittig auf dem jeweiligen Transportband aufliegen und mit den nach unten abstehenden Füßen an dem jeweiligen Bandkörper hängen bleiben. Insgesamt hat es also durchaus Vorteile, wenn die Breite der Transportbänder größer ist als die Breite der Verpackungen, da dann die Verpackungen - welcher Art auch immer - nicht mit den Bandkörpern in Kontakt kommen können. Auf diesen Vorteil verzichtet die vorliegende Erfindung gezielt, um die in Verbindung mit den Skin-Verpackungen beschriebenen, anderen Vorteile zu realisieren.

Die Ausrichtschienen sitzen jeweils auf dem jeweiligen Bandkörper auf, so dass zwischen den Ausrichtschienen und dem jeweiligen Bandkörper keinerlei Spalt, allenfalls aufgrund Toleranzen, vorhanden ist, so dass sich auch eine beschädigte Skin-Verpackung mit nach unten geknickten Karton dort nicht verhaken kann. Ein direktes Aufsitzen der Ausrichtschienen ist lediglich bei einem stationären Bandkörper möglich, nicht hingegen bei einem umlaufenden Transportband. Alternativ sind die Ausrichtschienen jeweils mit Abstand über dem jeweiligen Bandkörper angeordnet, d.h. derart, dass die Ausrichtschienen mit ihren Unterkanten jeweils oberhalb der Oberseite des Bandkörpers und jeweils zumindest nicht vollständig seitlich außerhalb des Bandkörpers angeordnet sind.

Insbesondere sind die Ausrichtschienen jeweils über eine jeweilige Halterung an einem Gestell der Wäge-Fördervorrichtung befestigt. Grundsätzlich wäre es jedoch auch denkbar, dass die Ausrichtschienen, insbesondere seitlich, an dem oder den Bandkörpern oder einem von mehreren Bandkörpern befestigt sind.

Vorzugsweise ist mindestens eine Ausrichtschiene, insbesondere sind die Ausrichtschienen jeweils, über einen jeweiligen Verstellmechanismus quer, insbesondere senkrecht, zur Förderrichtung, insbesondere zwischen einer jeweiligen innenliegenden, insbesondere ausgefahrenen, und einer jeweiligen außenliegenden, insbesondere eingefahrenen, Endposition, insbesondere stufenlos, verstellbar, so dass der Abstand der beiden Ausrichtschienen zueinander, d.h. deren gegenseitiger Abstand, an unterschiedliche Verpackungsbreiten anpassbar ist. Die Verstellung erfolgt insbesondere in horizontaler Richtung. Dabei ist es bevorzugt, wenn in allen Verstellpositionen der Ausrichtschiene bzw. der beiden Ausrichtschienen die Breite des jeweiligen Transportbands kleiner ist als der Abstand der beiden Ausrichtschienen zueinander, wobei das jeweilige Transportband zwischen den beiden Ausrichtschienen angeordnet ist, und wobei die Oberkante des Obertrums des jeweiligen Transportbands oberhalb der Unterkanten der Ausrichtschienen angeordnet ist.

Der jeweilige Verstellmechanismus kann eine Scherenkonstruktion, insbesondere nach Art eines Scherenhubtisches, mit zwei über Kreuz angeordneten Scherenhebeln aufweisen, die an ihren Mitten gelenkig miteinander verbunden sind, um die jeweilige Ausrichtschiene zwischen der ausgefahrenen Endposition und der eingefahrenen Endposition zu verstellen. Eine derartige Scherenkonstruktion ist einerseits einfach und andererseits stabil realisierbar.

Dabei können die vier Enden der beiden Scherenhebel über zwei Festlager und zwei Kulissensteuerungen an der jeweiligen Ausrichtschiene und einer jeweiligen Halterung für die jeweilige Ausrichtschiene gelagert sein. Eines der Festlager und/oder eine der Kulissensteuerungen kann, insbesondere jeweils, eine Feststellschraube umfassen, um die Scherenkonstruktion in ihrer jeweils eingestellten Lage zu fixieren.

Darüber hinaus können die Ausrichtschienen jeweils höhenverstellbar sein, insbesondere dadurch, dass eine jeweilige Halterung für die jeweilige Ausrichtschiene höhenverstellbar an einem Gestell der Wäge-Fördervorrichtung befestigt ist. In einer unteren Endstellung können die Ausrichtschienen dann mit einem schmalen Transportband verwendet werden, und in einer oberen Endstellung mit einem herkömmlichen, breiten Transportband, bei dem die Ausrichtschienen dann über dem Transportband und mit Abstand zu diesem angeordnet sind, wie es aus dem Stand der Technik bekannt ist. Dies erhöht die Flexibilität der Wäge-Fördervorrichtung, da hierdurch die Möglichkeit geboten wird, eine aus dem Stand der Technik bekannte Wäge-Fördervorrichtung durch Zuhilfenahme neuer Transportbänder mit anderen Breiten und/oder neuer Bandkörper mit Transportbändern mit anderen Breiten ohne Austausch der Ausrichtschienen von normalen Standard-Verpackungen auf die vorgenannten Skin-Verpackungen umzurüsten. Grundsätzlich gilt, dass der jeweilige Bandkörper über einen jeweiligen Schnellverschluss an einem Gestell der Wäge-Fördervorrichtung befestigt sein kann, und/oder dass das jeweilige Transportband über einen jeweiligen Schnellverschluss an dem jeweiligen Bandkörper angebracht sein kann. Insbesondere in diesem Fall ist es möglich, dass der jeweilige Bandkörper an einem Gestell der Wäge-Fördervorrichtung befestigt ist, wobei die Befestigung werkzeuglos lösbar ist, und/oder dass das jeweilige Transportband werkzeuglos von dem Bandkörper lösbar ist. Durch eine einfache Wechselbarkeit der Transportbänder und/oder der Bandkörper kann die vorgenannte Umrüstung von normalen Verpackungen auf Skin-Verpackungen einfach vorgenommen werden.

Insbesondere im Zusammenhang mit einer Umrüstung, wie sie vorstehend beschrieben ist, ist es bevorzugt, wenn die Wäge-Fördervorrichtung einen Satz an Transportbändern mit verschiedenen Breiten und/oder einen Satz an Förderbändern mit Transportbändern mit verschiedenen Breiten umfasst, die wahlweise für den Betrieb der Wäge-Fördervorrichtung verwendet werden können.

Vorzugsweise umfasst das Wägeband einen Bandkörper und ein im Betrieb der Wäge-Fördervorrichtung um den Bandkörper umlaufendes Transportband, dessen Breite größer ist als der Abstand der beiden Ausrichtschienen zueinander. Dadurch kann ausgeschlossen werden, dass eine Verpackung beim Überqueren des Wägebands den Bandkörper des Wägebands berührt, wodurch nicht nur die Verpackung gebremst und verdreht werden kann, sondern wodurch auch ein beim Wiegen nicht erwünschter Kraftnebenschluss entstehen kann.

Die vorliegende Erfindung betrifft ferner ein Verfahren zum Betreiben einer Wäge-Fördervorrichtung für Waren, insbesondere für Verpackungen, insbesondere eines Preisauszeichners, mit zumindest einem Förderband, insbesondere einem Zuführband und/oder einem Vereinzlerband, und einem dem Förderband in Förderrichtung nachgeordneten Wägeband, wobei das jeweilige Förderband einen Bandkörper mit einer Oberseite und ein im Betrieb der Wäge-Fördervorrichtung um den Bandkörper umlaufendes Transportband umfasst, und wobei das zumindest eine Förderband in Förderrichtung beidseits jeweils mit einer Ausrichtschiene versehen ist, die der Ausrichtung der Waren dienen, wobei das zumindest eine Förderband mit Waren betrieben wird, deren Breite größer ist als die Breite des jeweiligen Transportbands.

Weitere vorteilhafte Ausgestaltungen der Erfindung sind in den Unteransprüchen, der Figurenbeschreibung und der Zeichnung beschrieben.

Die Erfindung wird im Folgenden beispielhaft unter Bezugnahme auf die Zeichnung beschrieben. Es zeigen,
Fig. 1 eine schematische Darstellung einer aus dem Stand der Technik bekannten Konfiguration eines Preisauszeichners,
Fig. 2 ein aus dem Stand der Technik bekanntes Förderband mit Ausrichtschienen,
Fig. 3 eine erfindungsgemäße Wäge-Fördervorrichtung mit einer linken und einer rechten Ausrichtschiene in einer Draufsicht,
Fig. 4 die Wäge-Fördervorrichtung aus Fig. 3 in einer perspektivischen Frontalansicht, und
Fig. 5 die rechte Ausrichtschiene aus Fig. 3.

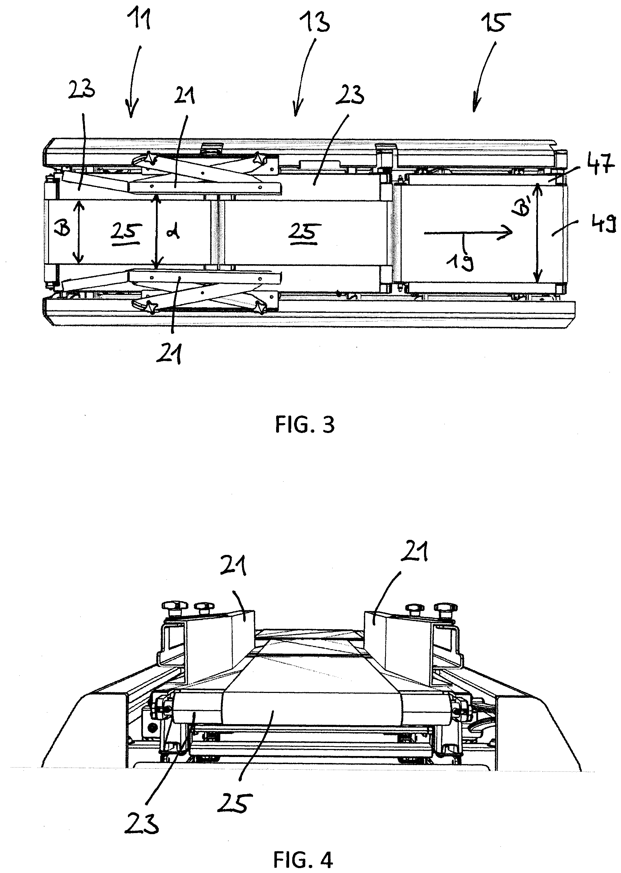

Der in den Fig. 3 und 4 dargestellte Preisauszeichner umfasst ein Zuführband 11, ein Vereinzlerband 13, ein Wägeband 15 und ein nicht dargestelltes Etikettierband, welches in Fig. 1 mit dem Bezugszeichen 17 versehen ist, um von einer nicht dargestellten Verpackungsmaschine gelieferte verpackte Waren zu wiegen und zu etikettieren. Um die Verpackungen für die Etikettierung korrekt zu platzieren und korrekt auszurichten, ist in Förderrichtung 19 links und rechts des Zuführbands 11 und des Vereinzlerbands 13 jeweils eine Ausrichtschiene 21 vorgesehen. Die beiden Ausrichtschienen 21 erstrecken sich jeweils in Förderrichtung 19, wobei sie bandeinlaufseitig gemeinsam einen trichterförmigen Abschnitt bilden, an den sich ein weiterer Abschnitt anschließt, in dem die beiden Ausrichtschienen 21 parallel zueinander verlaufen.

Das Zuführband 11 und das Vereinzlerband 13 umfassen jeweils einen Bandkörper 23 sowie ein Transportband 25, das um den jeweiligen Bandkörper 23 herum gespannt ist und im Betrieb um den jeweiligen Bandkörper 23 umläuft. Die beiden Transportbänder 25 besitzen eine identische Breite B und fluchten miteinander, ebenso die beiden Bandkörper 23. Wie aus den Fig. 3 und 4 zu erkennen ist, ist die Breite B der beiden Transportbänder 25 kleiner als der gegenseitige Abstand d der beiden Ausrichtschienen 21, und die beiden Transportbänder 25 sind zwischen den beiden Ausrichtschienen 21 angeordnet. Die Breite der Transportbänder 25 ist auch kleiner als die Breite der Bandkörper 23.

Da sich die beiden Ausrichtschienen 21 links und rechts der Transportbänder 25 - und nicht über den Transportbändern 25 - befinden, können die Ausrichtschienen 21 auch auf den Bandkörpern 23 aufsitzen, so dass - anders als aus dem Stand der Technik gemäß Fig. 2 bekannt - unter den Ausrichtschienen 21 kein Spalt 51 entsteht. Dies verhindert, dass bei sogenannten Skin-Verpackungen der Trägerkarton unter die Ausrichtschienen 21 geraten kann. In einem derartigen Fall würde die Skin-Verpackung dann entweder nicht ausgerichtet werden, falls der Trägerkarton einfach unter der Ausrichtschiene 21 hindurchläuft, oder die Skin-Verpackung verklemmt unterhalb der Ausrichtschiene 21, wodurch ein Produktstau ausgelöst wird. Grundsätzlich können die beiden Ausrichtschienen 21 auch mit etwas Abstand über den Bandkörpern 23 angeordnet sein. Wichtig ist jedoch, dass die Unterkante der Ausrichtschienen 21 unterhalb der Oberseite des Obertrums der Transportbänder 25 verläuft, da dann der Trägerkarton einer auf dem jeweiligen Transportband 25 aufliegenden Skin-Verpackung gleichwohl weiter an die jeweilige Innenseite der jeweiligen Ausrichtschiene 21 stößt und nicht darunter gerät, es sei denn, der Trägerkarton ist im Einzelfall verzogen oder geknickt.

Das Wägeband 15 umfasst ebenfalls einen Bandkörper 47 und ein im Betrieb der Wäge-Fördervorrichtung um den Bandkörper 47 umlaufendes Transportband 49. Die Breite B' des Transportbands 49 des Wägebands 15 ist größer als die Breite B der Transportbänder 25 des Zuführbands 11 und des Vereinzlerbands 13 und auch größer als der Abstand d der beiden Ausrichtschienen 21 zueinander. Hierdurch wird ausgeschlossen, dass eine sich auf dem Wägeband 15 befindliche Verpackung den Bandkörper 47 des Wägebands 15 berührt, was zu einer Drehung der Verpackung und/oder einem nicht tolerierbaren Kraftnebenschluss bei der Wiegung führen kann.

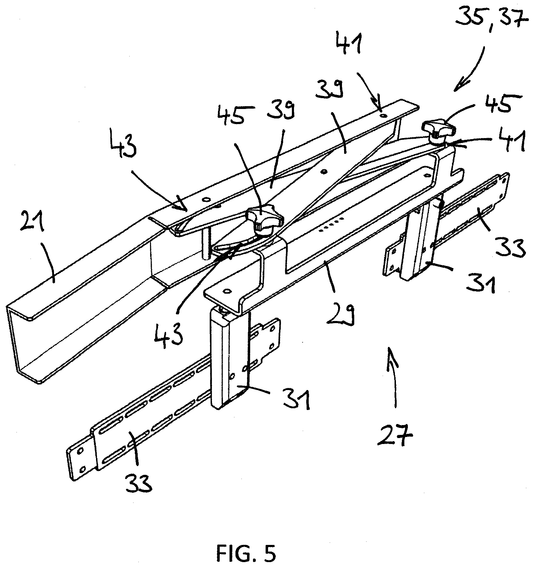

Die Ausrichtschienen 21 sind jeweils mittels einer jeweiligen Halterung 27 (vgl. Fig. 5) an einem Gestell der Wäge-Fördervorrichtung montiert. Die jeweilige Halterung 27 umfasst einen Längsträger 29, an dem die jeweilige Ausrichtschiene 21 montiert ist, zwei mit dem Längsträger 29 verbundene Vertikalträger 31 und zwei Montagebleche 33, die an dem Gestell festgeschraubt werden. Grundsätzlich kann auch vorgesehen sein, dass die Halterungen 27 höhenverstellbar an das Gestell montierbar sind, beispielsweise über entsprechende Langlöcher, was allerdings nicht dargestellt ist. Hierdurch wird ermöglicht, dass die Wäge-Fördervorrichtung einfach auf breitere Transportbänder 25 umgerüstet werden kann, in welchem Fall die Ausrichtschienen 25 dann nicht mehr länger neben, sondern über den Transportbändern 25 angeordnet sind, wie es für andere Verpackungen als Skin-Verpackungen ohne Probleme möglich ist.

Es ist daher von Vorteil, wenn die Bandkörper 23 und/oder die Transportbänder 25 über Schnellverschlüsse an dem Gestell bzw. den Bandkörpern 23 montiert sind und/oder werkzeuglos abgenommen und aufgesetzt werden können. Durch Vorhalten mehrerer Bandkörper 23 mit Transportbändern 25 mit unterschiedlichen Breiten und/oder mehrerer Transportbänder 25 mit unterschiedlichen Breiten kann ein Umrüsten einfach und schnell erfolgen.

Die Ausrichtschienen 21 sind jeweils über einen jeweiligen Verstellmechanismus 35, der nach Art eines Scherenhubtisches ausgebildet ist, senkrecht zur Förderrichtung 19 verstellbar. Damit ist der Abstand d der beiden Ausrichtschienen 21 zueinander an Verpackungen verschiedener Breiten anpassbar. Der jeweilige Verstellmechanismus 35 umfasst eine Scherenkonstruktion 37 mit zwei Scherenhebeln 39, die über Kreuz angeordnet und an ihren Mitten gelenkig miteinander verbunden sind. Die beiden Scherenhebel 39 sind über insgesamt zwei Festlager 41 und zwei Kulissensteuerungen 43 einerseits an der jeweiligen Ausrichtschiene 21 und andererseits an der jeweiligen Halterung 27 gelagert. Hierdurch kann die jeweilige Ausrichtschiene 21 zwischen einer außenliegenden Endposition, in der die Scherenkonstruktion eingefahren ist, und einer weiter innenliegenden Endposition, in der die Scherenkonstruktion ausgefahren ist, stufenlos verstellt werden. Die beiden Lagerungen 41, 43 an der jeweiligen Halterung 27, nämlich ein Festlager 41 und eine Kulissensteuerung 43, umfassen dabei jeweils eine Feststellschraube 45, um die Scherenkonstruktion 37 in der jeweils eingestellten Verfahrposition zu arretieren.

### Bezugszeichenliste

- 11: Zuführband
- 13: Vereinzlerband
- 15: Wägeband
- 17: Etikettierband
- 19: Förderrichtung
- 21: Ausrichtschiene
- 23: Bandkörper
- 25: Transportband
- 27: Halterung
- 29: Längsträger
- 31: Vertikalträger
- 33: Montageblech
- 35: Verstellmechanismus
- 37: Scherenkonstruktion
- 39: Scherenhebel
- 41: Festlager
- 43: Kulissensteuerung
- 45: Feststellschraube
- 47: Bandkörper
- 49: Transportband
- 51: Spalt

- B, B': Breite
- d: Abstand

## Patentansprüche

1. Wäge-Fördervorrichtung für Waren, insbesondere für Verpackungen, insbesondere Preisauszeichner, mit zumindest einem Förderband (11, 13), insbesondere einem Zuführband (11) und/oder einem Vereinzlerband (13), und einem dem Förderband (11, 13) in Förderrichtung (19) nachgeordneten Wägeband (15),
wobei das jeweilige Förderband (11, 13) einen Bandkörper (23) mit einer Oberseite und ein im Betrieb der Wäge-Fördervorrichtung um den Bandkörper (23) umlaufendes Transportband (25) umfasst, und
wobei das zumindest eine Förderband (11, 13) in Förderrichtung (19) beidseits jeweils mit einer Ausrichtschiene (21) versehen ist, wobei die beiden Ausrichtschienen (21) der Ausrichtung der Waren dienen,
**dadurch gekennzeichnet, dass**
die Breite (B) des jeweiligen Transportbands (25) kleiner ist als der Abstand (d) der beiden Ausrichtschienen (21) zueinander, wobei das jeweilige Transportband (25) zwischen den beiden Ausrichtschienen (21) angeordnet ist, und wobei die Oberseite des Obertrums des jeweiligen Transportbands (25) oberhalb der Unterkanten der Ausrichtschienen (21) angeordnet ist, wobei die Ausrichtschienen (21) jeweils auf dem jeweiligen Bandkörper (23) aufsitzen oder jeweils mit Abstand über dem jeweiligen Bandkörper (23) angeordnet sind.

2. Wäge-Fördervorrichtung nach Anspruch 1,
**dadurch gekennzeichnet, dass**
die Ausrichtschienen (21) jeweils über eine jeweilige Halterung (27) an einem Gestell der Wäge-Fördervorrichtung befestigt sind.

3. Wäge-Fördervorrichtung nach zumindest einem der vorstehenden Ansprüche,
**dadurch gekennzeichnet, dass**
mindestens eine Ausrichtschiene (21) über einen jeweiligen Verstellmechanismus (35) quer, insbesondere senkrecht, zur Förderrichtung (19), insbesondere zwischen einer jeweiligen innenseitigen, insbesondere ausgefahrenen, und einer jeweiligen außenseitigen, insbesondere eingefahrenen, Endposition, insbesondere stufenlos, verstellbar ist.

4. Wäge-Fördervorrichtung nach Anspruch 3,
**dadurch gekennzeichnet, dass**
der jeweilige Verstellmechanismus (35) eine Scherenkonstruktion (37) mit zwei über Kreuz angeordneten Scherenhebeln (39) aufweist, die an ihren Mitten gelenkig miteinander verbunden sind, um die jeweilige Ausrichtschiene (21) zwischen der ausgefahrenen Endposition und der eingefahrenen Endposition zu verstellen.

5. Wäge-Fördervorrichtung nach Anspruch 4,
**dadurch gekennzeichnet, dass**
die vier Enden der beiden Scherenhebel (37) über zwei Festlager (41) und zwei Kulissensteuerungen (43) an der jeweiligen Ausrichtschiene (21) und einer jeweiligen Halterung (27) für die jeweilige Ausrichtschiene (21) gelagert sind.

6. Wäge-Fördervorrichtung nach Anspruch 5,
**dadurch gekennzeichnet, dass**
eines der Festlager (41) und/oder eine der Kulissensteuerungen (43) eine Feststellschraube (45) umfasst, um die Scherenkonstruktion (37) in ihrer jeweils eingestellten Lage zu fixieren.

7. Wäge-Fördervorrichtung nach zumindest einem der vorstehenden Ansprüche,
**dadurch gekennzeichnet, dass**
die Ausrichtschienen (21) jeweils höhenverstellbar sind, insbesondere dadurch, dass eine jeweilige Halterung (27) für die jeweilige Ausrichtschiene (21) höhenverstellbar an einem Gestell der Wäge-Fördervorrichtung befestigt ist.

8. Wäge-Fördervorrichtung nach zumindest einem der vorstehenden Ansprüche,
**dadurch gekennzeichnet, dass**
der jeweilige Bandkörper (23) über einen jeweiligen Schnellverschluss an einem Gestell der Wäge-Fördervorrichtung befestigt ist, und/oder das jeweilige Transportband (25) über einen jeweiligen Schnellverschluss an dem jeweiligen Bandkörper angebracht ist.

9. Wäge-Fördervorrichtung nach zumindest einem der vorstehenden Ansprüche,
**dadurch gekennzeichnet, dass**
der jeweilige Bandkörper (23) an einem Gestell der Wäge-Fördervorrichtung befestigt ist, wobei die Befestigung werkzeuglos lösbar ist, und/oder
das jeweilige Transportband (23) werkzeuglos von dem Bandkörper (23) lösbar ist.

10. Wäge-Fördervorrichtung nach zumindest einem der vorstehenden Ansprüche,
**dadurch gekennzeichnet, dass**
die Wäge-Fördervorrichtung einen Satz an Transportbändern (25) mit verschiedenen Breiten (B) und/oder einen Satz an Förderbändern (11, 13) mit Transportbändern (25) mit verschiedenen Breiten (B) umfasst, die wahlweise für den Betrieb der Wäge-Fördervorrichtung verwendet werden können.

11. Wäge-Fördervorrichtung nach zumindest einem der vorstehenden Ansprüche,
**dadurch gekennzeichnet, dass**
das Wägeband (15) einen Bandkörper (47) und ein im Betrieb der Wäge-Fördervorrichtung um den Bandkörper (47) umlaufendes Transportband (49) umfasst, dessen Breite (B') größer ist als der Abstand (d) der beiden Ausrichtschienen (21) zueinander.

## Claims

1. A weighing conveying apparatus for goods, in particular for packaging, in particular a price labeler, having at least one conveyor belt (11, 13), in particular a feed belt (11) and/or a separating belt (13), and a weighing belt (15) arranged downstream of the conveyor belt (11, 13) in the conveying direction (19),
wherein the respective conveyor belt (11, 13) comprises a belt body (23) having an upper side and a transport belt (25) running around the belt body (23) in operation of the weighing conveying apparatus; and
wherein the at least one conveyor belt (11, 13) is provided with a respective alignment rail (21) at both sides in the conveying direction (19), with the two alignment rails (21) serving for the alignment of the goods,
**characterized in that**
the width (B) of the respective transport belt (25) is smaller than the spacing (d) of the two alignment rails (21) from one another, with the respective transport belt (25) being arranged between the two alignment rails (21), and with the upper side of the upper run of the respective transport belt (25) being arranged above the lower edges of the alignment rails (21), with the alignment rails (21) each being seated on the respective belt body (23) or each being arranged at a spacing above the respective belt body (23).

2. A weighing conveying apparatus in accordance with claim 1,
**characterized in that**
the alignment rails (21) are each fastened to a rack of the weighing conveying apparatus via a respective holder (27).

3. A weighing conveying apparatus in accordance with at least one of the preceding claims,
**characterized in that**
at least one alignment rail (21) is adjustable, in particular continuously, via a respective adjustment mechanism (35), transversely, in particular perpendicular, to the conveying direction (19), in particular between a respective end position, in particular extended, at the inner side and a respective end position, in particular retracted, at the outer side.

4. A weighing conveying apparatus in accordance with claim 3,
**characterized in that**
the respective adjustment mechanism (35) has a scissor construction (37) having two scissor arms (39) which are arranged crossed and which are connected to one another in an articulated manner at their centers to adjust the respective alignment rail (21) between the extended end position and the retracted end position.

5. A weighing conveying apparatus in accordance with claim 4,
**characterized in that**
the four ends of the two scissor arms (37) are supported via two fixed bearings (41) and two slotted controls (43) at the respective alignment rail (21) and at a respective holder (27) for the respective alignment rail (21).

6. A weighing conveying apparatus in accordance with claim 5,
**characterized in that**
one of the fixed bearings (41) and/or one of the slotted controls (43) comprises/comprise a locking screw (45) to fix the scissor construction (37) in its respectively set position.

7. A weighing conveying apparatus in accordance with at least one of the preceding claims,
**characterized in that**
the alignment rails (21) are each vertically adjustable, in particular **in that** a respective holder (27) for the respective alignment rail (21) is vertically adjustably fastened to a rack of the weighing conveying apparatus.

8. A weighing conveying apparatus in accordance with at least one of the preceding claims,
**characterized in that**
the respective belt body (23) is fastened via a respective quick-closure to a rack of the weighing conveying apparatus; and/or
**in that** the respective transport belt (25) is attached via a respective quick-closure to the respective belt body.

9. A weighing conveying apparatus in accordance with at least one of the preceding claims,
**characterized in that**
the respective belt body (23) is fastened to a rack of the weighing conveying apparatus, with the fastening being releasable without tools; and/or
**in that** the respective transport belt (23) is releasable from the belt body (23) without tools.

10. A weighing conveying apparatus in accordance with at least one of the preceding claims,
**characterized in that**
the weighing conveying apparatus comprises a set of transport belts (25) having different widths (B) and/or a set of conveyor belts (11, 13) having transport belts (25) of different widths (B) which can be selectively used for the operation of the weighing conveying apparatus.

11. A weighing conveying apparatus in accordance with at least one of the preceding claims,
**characterized in that**
the weighing belt (15) comprises a belt body (47) and a transport belt (49) which runs around the belt body (47) in operation of the weighing conveying apparatus and whose width (B') is greater than the spacing (d) of the two alignment rails (21) from one another.

## Revendications

1. Dispositif de transport et de pesage pour des marchandises, en particulier pour des emballages, en particulier des étiqueteuses de prix, comprenant au moins une bande transporteuse (11, 13), en particulier une bande d'alimentation (11) et/ou une bande d'individualisation (13), et une bande de pesage (15) disposée en aval de la bande transporteuse (11, 13) dans la direction de transport (19),
dans lequel
la bande transporteuse respective (11, 13) comprend un corps de bande (23) avec un côté supérieur et une bande de convoyage (25) tournant autour du corps de bande (23) pendant le fonctionnement du dispositif de transport et de pesage, et
dans la direction de transport (19), ladite au moins une bande transporteuse (11, 13) est pourvue de part et d'autre d'un rail d'alignement (21), les deux rails d'alignement (21) servant à aligner les marchandises,
**caractérisé en ce que**
la largeur (B) de la bande de convoyage respective (25) est inférieure à la distance (d) des deux rails d'alignement (21) l'un par rapport à l'autre, la bande de convoyage respective (25) étant disposée entre les deux rails d'alignement (21), et le côté supérieur du brin supérieur de la bande de convoyage respective (25) étant disposé au-dessus des bords inférieurs des rails d'alignement (21), les rails d'alignement (21) reposant chacun sur le corps de bande respectif (23) ou étant disposés chacun à distance au-dessus du corps de bande respectif (23).

2. Dispositif de transport et de pesage selon la revendication 1,
**caractérisé en ce que**
les rails d'alignement (21) sont chacun fixés à un cadre du dispositif de transport et de pesage par l'intermédiaire d'un support respectif (27).

3. Dispositif de transport et de pesage selon l'une au moins des revendications précédentes,
**caractérisé en ce que**
par l'intermédiaire d'un mécanisme de réglage respectif (35), au moins un rail d'alignement (21) est réglable en particulier en continu transversalement, en particulier perpendiculairement, à la direction de transport (19), en particulier entre une position de fin de course respective intérieure, en particulier déployée, et une position de fin de course respective extérieure, en particulier rétractée.

4. Dispositif de transport et de pesage selon la revendication 3,
**caractérisé en ce que**
le mécanisme de réglage respectif (35) comprend une construction en ciseaux (37) avec deux leviers de ciseaux (39) disposés en croix, qui sont reliés de manière articulée l'un à l'autre au niveau de leurs centres, afin de régler le rail d'alignement respectif (21) entre la position de fin de course déployée et la position de fin de course rétractée.

5. Dispositif de transport et de pesage selon la revendication 4,
**caractérisé en ce que**
les quatre extrémités des deux leviers de ciseaux (37) sont montées sur le rail d'alignement respectif (21) et sur un support respectif (27), destiné au rail d'alignement respectif (21), au moyen de deux paliers fixes (41) et de deux commandes à coulisse (43).

6. Dispositif de transport et de pesage selon la revendication 5,
**caractérisé en ce que**
l'un des paliers fixes (41) et/ou l'une des commandes à coulisse (43) comprend une vis d'immobilisation (45) pour fixer la construction en ciseaux (37) dans sa position réglée respective.

7. Dispositif de transport et de pesage selon l'une au moins des revendications précédentes,
**caractérisé en ce que**
les rails d'alignement (21) sont chacun réglables en hauteur, en particulier du fait qu'un support respectif (27) pour le rail d'alignement respectif (21) est fixé de manière réglable en hauteur sur un cadre du dispositif de transport et de pesage.

8. Dispositif de transport et de pesage selon l'une au moins des revendications précédentes,
**caractérisé en ce que**
le corps de bande respectif (23) est fixé à un cadre du dispositif de transport et de pesage par une attache rapide respective, et/ou la bande de convoyage respective (25) est montée au corps de bande respectif par une attache rapide respective.

9. Dispositif de transport et de pesage selon l'une au moins des revendications précédentes,
**caractérisé en ce que**
le corps de bande respectif (23) est fixé à un cadre du dispositif de transport et de pesage, la fixation étant détachable sans outils, et/ou la bande de convoyage respective (23) est détachable du corps de bande (23) sans outils.

10. Dispositif de transport et de pesage selon l'une au moins des revendications précédentes,
**caractérisé en ce que**
le dispositif de transport et de pesage comprend un ensemble de bandes de convoyage (25) de différentes largeurs (B) et/ou un ensemble de bandes transporteuses (11, 13) avec des bandes de convoyage (25) de différentes largeurs (B), qui peuvent être utilisées sélectivement pour le fonctionnement du dispositif de transport et de pesage.

11. Dispositif de transport et de pesage selon l'une au moins des revendications précédentes,
**caractérisé en ce que**
la bande de pesage (15) comprend un corps de bande (47) et une bande de convoyage (49) qui circule autour du corps de bande (47) pendant le fonctionnement du dispositif de transport et de pesage et dont la largeur (B') est supérieure à la distance (d) des deux rails d'alignement (21) l'un par rapport à l'autre.
